# EUROPEAN PATENT APPLICATION

(11) **EP 3 660 831 A1**
(43) Date of publication of application: **03.06.2020**
(21) Application number: 19201478.5
(22) Date of filing: 04.10.2019
(51) Int. Cl.: G09G 5/14, H04N 5/445

(54) **COMPUTER SYSTEM, DISPLAY APPARATUS, AND DISPLAY METHOD OF ON-SCREEN-DISPLAY INTERFACE**

(30) Priority: 27.11.2018 TW 107142170
(71) Applicant: Giga-Byte Technology Co., Ltd., New Taipei City 231 (TW)
(72) Inventor: Chen, Wu-Chuan, 231 New Taipei City (TW); Chang, Shih-Pin, 231 New Taipei City (TW); Liou, Yu-Cheng, 231 New Taipei City (TW); Liu, Chia-En, 231 New Taipei City (TW)
(74) Representative: Michalski Hüttermann & Partner Patentanwälte mbB

(57) **Abstract**

A display apparatus having a signal connection to a host is provided. The display apparatus includes a display module and a display controller. The display controller is configured to receive an on-screen-display (OSD) control signal and an image signal from the host, wherein the OSD control signal is generated in response to a specific event detected by the host. The host overwrites a specific region of the image signal with an OSD interface corresponding to the OSD control signal to generate an output image, and the display controller displays the output image on the display module.

## Description

### CROSS REFERENCE TO RELATED APPLICATIONS

This Application claims priority of Taiwan Patent Application No. 107142170, filed on Nov. 27, 2018.

### BACKGROUND OF THE INVENTION

### Field of the Invention

The invention relates to display apparatuses, and, in particular, to a computer system, a display apparatus, and a display method of an on-screen-display (OSD) interface.

### Description of the Related Art

The display apparatuses that are currently on the market (e.g., TVs or computer monitors) mostly have on-screen-display (OSD) functions. The OSD function, for example, can display the OSD options for adjusting the picture quality on the display apparatus, and cover the displayed OSD options on other screens so that the user can adjust the OSD options instantly. In a conventional display apparatus, the user can call out the screen of the OSD options through the physical buttons, and the OSD options may include brightness, contrast, color, color temperature, etc. However, when the conventional display apparatus is connected to a host, the display apparatus can usually only receive image signals from the host and display them. That is, the application executed by the host neither controls the OSD function in the display apparatus nor interacts with the OSD function.

### BRIEF SUMMARY OF THE INVENTION

A detailed description is given in the following embodiments with reference to the accompanying drawings.

In an exemplary embodiment, a display apparatus having a signal connection with a host is provided. The display apparatus includes a display module and a display controller. The display controller is configured to receive an on-screen-display (OSD) control signal and an image signal from the host, wherein the OSD control signal is generated in response to a specific event detected by the host. The host overwrites a specific region of the image signal with an OSD interface corresponding to the OSD control signal to generate an output image, and the display controller displays the output image on the display module.

In another exemplary embodiment, a computer system is provided. The computer system includes: a host and a display apparatus. The host is configured to execute an application to generate an image signal, and detect a specific event on the host to generate an on-screen-display (OSD) control signal. The display apparatus is electrically connected to the host, and the display apparatus includes: a display module and a display controller. The display controller is configured to receive the OSD control signal and the image signal from the host. The host overwrites a specific region of the image signal with an OSD interface corresponding to the OSD control signal to generate an output image, and the display controller displays the output image on the display module.

In yet another exemplary embodiment, a display method of an on-screen-display (OSD) interface for use in a display apparatus is provided. The display apparatus includes a display module and a display controller. The method includes the steps: utilizing the display controller to receive an OSD control signal and an image signal; utilizing the display controller to overwrite a specific region of the image signal with an OSD interface corresponding to the OSD control signal to generate an output image; and utilizing the display controller to display the output image on the display module.

### BRIEF DESCRIPTION OF THE DRAWINGS

The invention can be more fully understood by reading the subsequent detailed description and examples with references made to the accompanying drawings, wherein:
FIG. 1 is a block diagram of a computer system in accordance with an embodiment of the invention;
FIGs. 2A and 2B are diagrams of connection between the host and display apparatus in the computer system in accordance with an embodiment of the invention;
FIGs. 3A∼3F are diagrams of different OSD interfaces in accordance with an embodiment of the invention; and
FIG. 4 is a flow chart of a display method of the on-screen-display interface in accordance with an embodiment of the invention.

### DETAILED DESCRIPTION OF THE INVENTION

The following description is made for the purpose of illustrating the general principles of the invention and should not be taken in a limiting sense. The scope of the invention is best determined by reference to the appended claims.

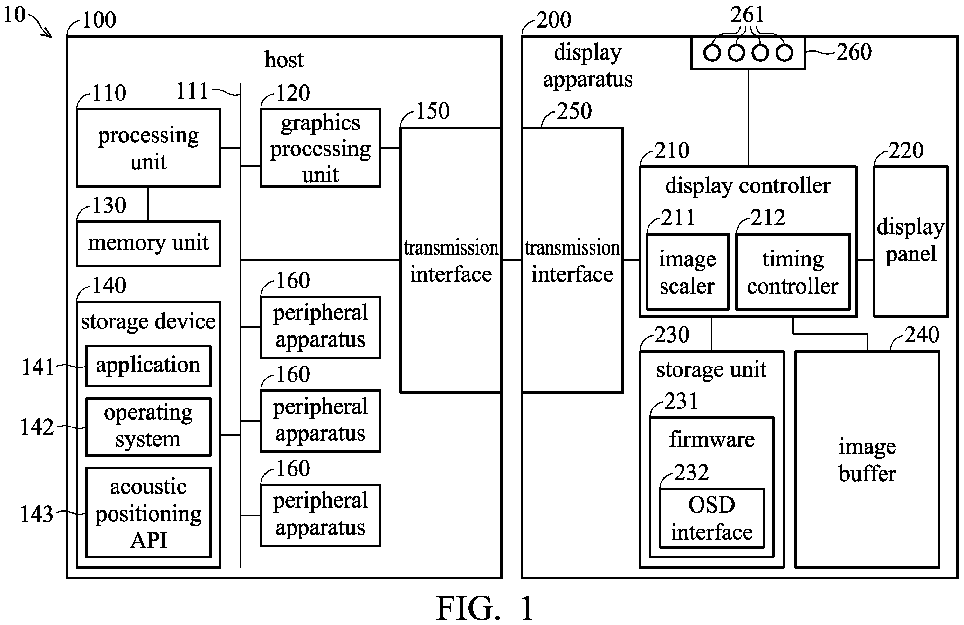

FIG. 1 is a block diagram of a computer system in accordance with an embodiment of the invention. The computer system 10, for example, may be a personal computer or server equipped with a display apparatus. As illustrated in FIG. 1, the computer system 10 includes a host 100 and a display apparatus 200, wherein the host 100 has a signal connection to the display apparatus 200. For example, the host 100 may include a processing unit 110, a graphics processing unit (GPU) 120, a memory unit 130, a storage device 140, one or more transmission interfaces 150, and one or more peripheral apparatuses 160. The processing unit 110, graphics processing unit 120, memory unit 130, storage device 140, transmission interfaces 150, and peripheral apparatuses 160 may couple to each other via the system bus 111. The processing unit 110, for example, may be a central processing unit (CPU), a general-purpose processor, etc., but the invention is not limited thereto. The graphics processing unit 120, for example, may be a graphics processing unit on a video adapter or integrated into the processing unit 110.

The memory unit 130 may be a random access memory such as a static random access memory (SRAM) or a dynamic random access memory (DRAM), but the invention is not limited thereto. The storage device 140 may be a non-volatile memory such as a hard-disk drive, a solid-state disk (SSD), a flash memory, or a read-only memory (ROM), but the invention is not limited thereto.

The transmission interface 150 may include wired transmission interfaces and/or wireless transmission interfaces. The wired transmission interfaces may include: high definition multimedia interface (HDMI), DisplayPort (DP) interface, embedded DisplayPort (eDP) interface, universal serial bus (USB) interface, USB Type-C interface, Thunderbolt interface, digital video interface (DVI), video graphics array (VGA) interface, general purpose input/output (GPIO) interface, universal asynchronous receiver/transmitter (UART) interface, serial peripheral interface (SPI), inter-integrated circuit (I2C) interface, or a combination thereof. The wireless transmission interfaces may include Bluetooth, WiFi, near-field communication (NFC) interface, etc., but the invention is not limited thereto. The peripheral apparatus 160, for example, may include input apparatuses such as a keyboard, a mouse, a touch pad, etc., but the invention is not limited thereto.

For example, the storage device 140 may store one or more applications 141, an operating system 142 (e.g., Windows, Linux, MacOS, etc.), and an acoustic positioning application program interface (API) 143. The processing unit 110 may load the operating system 142 and one of the applications 141 to the memory unit 130 for execution. The graphics processing unit 120, for example, may perform graphics processing of the application executed by the processing unit 110 to generate an image signal including one or more images, and transmit the image signal to the display apparatus 200 via one of the transmission interfaces 150 (e.g., HDMI or DisplayPort interface). The acoustic positioning API 143 is capable of detecting an acoustic signal generated by another application (e.g., a PC game) executed by the processing unit 110 and analyzing the acoustic signal for positioning, such as determining the orientation and/or distance of the acoustic signal.

The display apparatus 200, for example, may be a flat panel display, a television, a projector, or a computer monitor, but the invention is not limited thereto. The display apparatus 200 includes a display controller 210, a display module 220, a storage unit 230, an image buffer 240, one or more transmission interface 250, and an input interface 260. The transmission interface 250 may include wired transmission interfaces and/or wireless transmission interfaces. The wired transmission interfaces may include: high definition multimedia interface (HDMI), DisplayPort (DP) interface, embedded DisplayPort (eDP) interface, universal serial bus (USB) interface, USB Type-C interface, Thunderbolt interface, digital video interface (DVI), video graphics array (VGA) interface, general purpose input/output (GPIO) interface, universal asynchronous receiver/transmitter (UART) interface, serial peripheral interface (SPI), inter-integrated circuit (I2C) interface, or a combination thereof. The wireless transmission interfaces may include Bluetooth, WiFi, near-field communication (NFC) interface, etc., but the invention is not limited thereto. The peripheral apparatus 160, for example, may include input apparatuses such as a keyboard, a mouse, a touch pad, etc., but the invention is not limited thereto.

The display controller 210, for example, may be implemented by an application-specific integrated circuit (ASIC), a system-on-chip (SoC), a processor, or a microcontroller, but the invention is not limited thereto.

The display module 220, for example, may be a liquid-crystal display panel, a light-emitting diode (LED) display panel, an organic light-emitting diode (OLED) display panel, a cathode ray tube (CRT) display, an E-Ink display module, an electroluminescent display module, a plasma display module, a projection display module, or a quantum dot display module, but the invention is not limited thereto.

The storage unit 230, for example, may be a non-volatile memory such as a read-only memory (ROM), an erasable programmable read-only memory (EPROM), an electrically erasable programmable read-only memory (EEPROM), etc., but the invention is not limited thereto. The storage unit 230 is configured to store firmware 231 associated with the display apparatus 200. The storage unit 230 may be disposed outside the display controller 210, or alternatively integrated into the display controller 210.

The firmware 231, for example, may include extended display identification data (EDID) and display settings of the display apparatus 200, and one or more on-screen-display (OSD) interfaces 232 and their settings. The EDID, for example, may include information such as the manufacturer, product name, resolution, frames per second (FPS) of the display apparatus 200. The display settings of the display apparatus 200 may include the brightness, contrast, sharpness, color temperature of the display apparatus 200. In an embodiment, the display controller 210 may read the firmware 231 stored in the storage unit 230 via a bus (e.g., an I2C bus), and configure the corresponding display parameters. In addition, the display controller 210 may transmit the EDID of the display apparatus 200 to the host 100 via one of the transmission interfaces 250 (e.g., may be an image-transmission channel or a data-transmission channel), so that the processing unit 110 and the graphics processing unit 120 in the host 100 may configure the resolution and corresponding synchronization signals of the output image signal based on the EDID. The OSD interfaces 232, for example, may include an OSD menu and corresponding options, an information dashboard, a timer, a counter, a crosshair, a specific symbol, a specific color, a specific text, or a combination thereof, but the invention is not limited thereto.

The image buffer 240, for example, may be a volatile memory (e.g., a DRAM) or a non-volatile memory (e.g., a flash memory), that is configured to store output images to be displayed on the display module 220, wherein the host 100 or the display controller 210 may, according to an OSD control signal generated by the host 100, overwrite a specific region of the image signal stored in the image buffer 240 with the one or more OSD interfaces 232, and details will be described later.

The input interface 260 may include one or more physical buttons 261. In response to the user pressing one of the physical buttons 261, the display controller 210 may read the program code or firmware of the OSD menu and corresponding options of the OSD interfaces 232 from the storage unit 230, and display the OSD menu and corresponding options on the display module 220. In an embodiment, the user may press the physical buttons 261 to adjust the brightness, contrast, sharpness, color temperature, or activate or deactivate other interfaces among the OSD interfaces 232. In another embodiment, the activating and deactivating of the OSD interfaces 232 and the content displayed on the OSD interface 232, for example, can be controlled by the host 100 or the display controller 210, where the details will be described later.

In an embodiment, the display controller 210 may include an image scalar 211 and a timing controller 212. The display controller 210 may receive the image signal from the host 100 and/or another signal from other hosts via one of the transmission interfaces 250, and the image scalar 211 may perform an image-scaling process and/or image-overlaying process on the received image signals to fit the resolution of the display module 220, and store the images (e.g., output images) generated by the image-scaling process to the image buffer 240. The timing controller 212 may control the display module 220 to read the output images from the image buffer 240 for displaying.

In another embodiment, the display controller 210 may include the timing controller 212, and the resolution of the image signal from the host 100 may fit that of the display module 220. Thus, the display controller 210 may directly store the received image signal from the host 100 to the image buffer 240 without performing the image-scaling process. The timing controller 212 may read the output images stored in the image buffer 240, and control the display module 220 to display the output images.

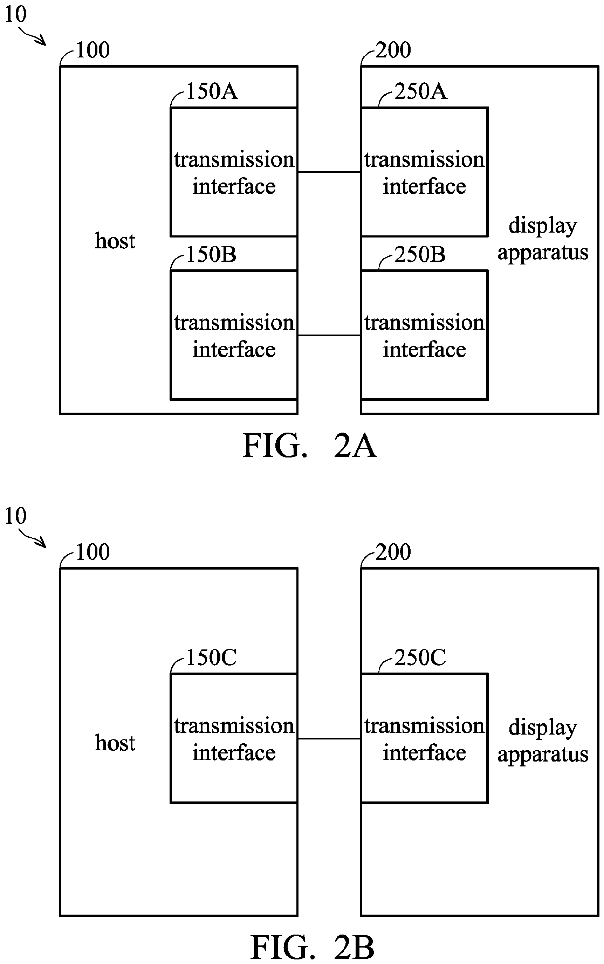

FIGs. 2A and 2B are diagrams of connection between the host and display apparatus in the computer system in accordance with an embodiment of the invention.

As depicted in FIG. 2A, the image signal generated by the graphics processing unit 120 of the host 100 may be transmitted to the display controller 210 of the display apparatus 200 via the transmission interface 150A (e.g., an HDMI interface) of the host 100 and the transmission interface 250A (e.g., an HDMI interface) of the display apparatus 200. For example, the transmission channel between the transmission interfaces 150A and 250A can be regarded as an image-transmission channel.

In addition, the processing unit 110 of the host 100 is capable of detecting a specific event on the host 100, and generating an OSD control signal in response to the detected specific event. For example, the specific event may be a specific input signal received by one of the peripheral apparatuses 160 of the host 100, such as a specific button or a combination of buttons input from the keyboard, and each of the OSD interfaces 232 of different types may correspond to a respective specific button or combination of buttons. In addition, the host 100 may transmit the OSD control signal to the display apparatus 200 via the transmission interface 150B (e.g., a USB interface) of the host 100 and the corresponding transmission interface 250B (e.g., a USB interface) of the display apparatus 200. For example, the transmission channel between the transmission interfaces 150B and 250B can be regarded as a data-transmission channel or a control-signal-transmission channel.

As depicted in FIG. 2B, the image signal generated by the graphics processing unit 120 of the host 100 can be transmitted to the display controller 210 of the display apparatus 200 via the transmission interface 150C (e.g., a USB Type-C interface) of the host 100 and the corresponding transmission interface 250C (e.g., a USB Type-C interface) of the display apparatus 200. In addition, the processing unit 110 of the host 100 may detect a specific event on the host 100, and generate an OSD control signal in response to the detected specific event. For example, the specific event may be a specific input signal received by one of the peripheral apparatuses 160 of the host 100, such as a specific button or a combination of buttons input from the keyboard, and each of the OSD interfaces 232 of different types may correspond to a respective specific button or combination of buttons. It should be noted that the USB Type-C protocol may support high-speed data transmission in addition to the image/video transmission (e.g., supporting the DisplayPort or HDMI standards). That is, the image-transmission channel and the data-transmission channel can be integrated into the USB Type-C interface. Accordingly, the host 100 may transmit the OSD control signal to the display apparatus 200 via the transmission interface 150C (e.g., a USB Type-C interface) of the host 100 and the corresponding transmission interface 250C (e.g., a USB Type-C interface) of the display apparatus 200.

For purposes of description, the following embodiments are described with the hardware configuration shown in FIG. 2A, but can also be implemented by the hardware configuration shown in FIG. 2B in a similar manner. In an embodiment, the user may press a specific combination of buttons (e.g., CTRL+ALT+1, not limited) on the keyboard, wherein the specific combination of buttons corresponds to the information dashboard of the OSD interfaces 232. The information dashboard, for example, may show information about different components in the host, such as the CPU temperature, CPU usage, CPU fan speed, GPU temperature, GPU usage, GPU fan speed, moving speed (e.g., DPI) and response speed of the mouse, upload/download speed of the network, but the invention is not limited thereto. Specifically, the processing unit 110 may, periodically or in response to detection of the aforementioned specific combination of buttons, obtain the aforementioned information from the respective BIOS of each of the motherboard, video adapter, mouse, network adapter (all not shown) in the host 100, and integrate the obtained information of the components into the OSD control signal.

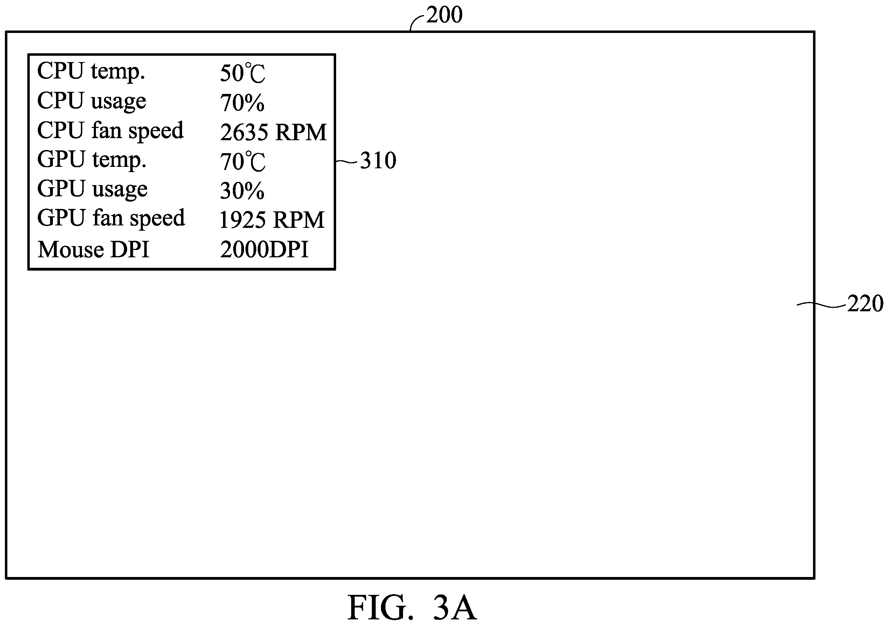

In the embodiment, the OSD control signal may be a memory write command in a specific format. For example, the processing unit 110 may transmit the OSD control signal (i.e., a memory write command) to the display apparatus 200 via the transmission interface 150B, and bypass the display controller 210 to directly overwrite the information dashboard interface of the OSD interfaces, that includes specific text or numerical information (e.g., values of the aforementioned information about different components in the host 100), to a specific region of the image signal stored in the image buffer 240. The OSD interface is displayed on the top of different image layers (e.g., may be image signals from different hosts) in the display apparatus 200 and the display controller 210 displays the content stored in the image buffer 240 on the display module 220. Accordingly, when the user utilizes the aforementioned specific combination of buttons to activate the information dashboard 310 of the OSD interfaces, the user can view the information dashboard 310 of the OSD interfaces on the display apparatus 200 regardless of the application being executed by the host 100 or what kind of screen is being displayed by the host 100, as illustrated in FIG. 3A.

Alternatively, the OSD control signal may be a command including text/numerical information and its type (e.g., information dashboard). When the processing unit 110 transmits the OSD control signal to the display apparatus 200 via the transmission interface 150B, the display controller 210 may recognize that the text/numerical information and its type in the OSD control signal belong to the OSD interface, and store the text/numerical information and its type into a volatile memory (e.g. a static random access memory or a register) of the display controller 210. The display controller 210 may retrieve patterns of the texts and numbers corresponding to the text/numerical information and its type from the storage unit 230, and overwrite the retrieved patterns of the texts and numbers (i.e., information dashboard interface of the OSD interfaces) into a specific region of the image signal stored in the image buffer 240 according to the type of the retrieved patterns.

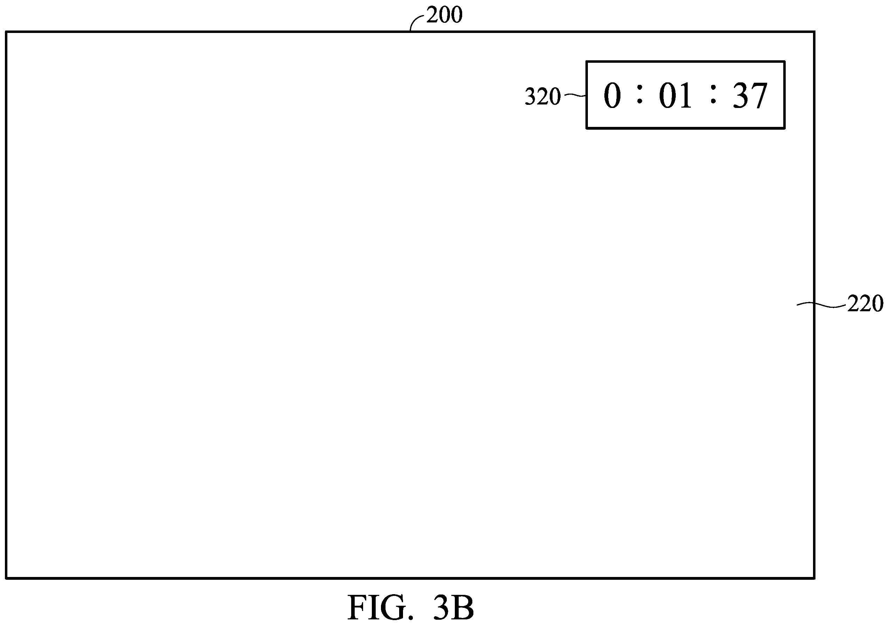

In another embodiment, the user may use other specific combinations of buttons such as CTRL+ALT+2, CTRL+ALT+3, CTRL+4 (not limited) to activate/deactivate or reset the functions of the timer, counter, crosshair of the OSD interfaces. For example, in response to the user utilizing the specific combination of buttons CTRL+ALT+2 to activate the timer of the OSD interfaces 232, the processing unit 110 may calculate the time and periodically (e.g., every 0.1 second) issue the corresponding OSD control signal to the display apparatus 200, wherein the details for overwriting the specific region of the image signal stored in the image buffer 240 using texts, numbers, or patterns of the OSD interface can be referred to in the aforementioned embodiment. Accordingly, in response to the user utilizing the aforementioned specific combination of buttons to activate the timer of the OSD interface, the user may view the timer 320 of the OSD interfaces on the display apparatus 200 regardless of the application being executed by the host 100 or what kind of screen being displayed by the host 100, as illustrated in FIG. 3B. If the processing unit 110 detects that the user has pressed the same specific combination of buttons CTRL+ALT+2 again, the processing unit 110 may reset the time of the timer 320, and recalculate the time of the timer 320 and periodically (e.g., every 0.1 second) issue the corresponding OSD control signal to the display apparatus 200.

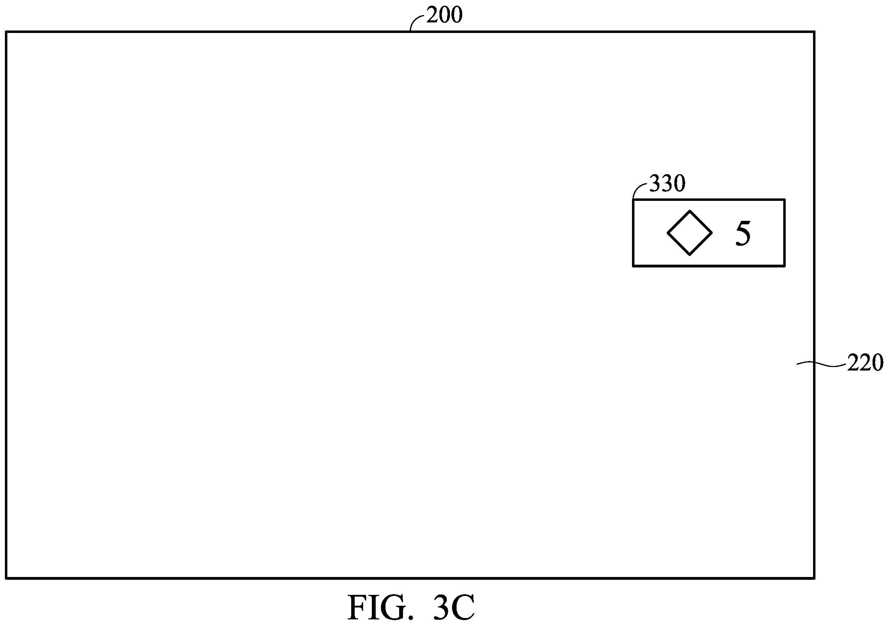

In response to the user utilizing the specific combination of buttons CTRL+ALT+3 to activate the timer of the OSD interfaces 232, the processing unit 110 may calculate the number of times and issue the corresponding OSD control signal to the display apparatus 200, wherein the details for overwriting the specific region of the image signal stored in the image buffer 240 using texts, numbers, or patterns of the OSD interface can be referred to in the aforementioned embodiment. Accordingly, in response to the user utilizing the aforementioned specific combination of buttons to activate the counter 330 of the OSD interfaces, the user may view the counter 330 of the OSD interfaces on the display apparatus 200 regardless of the application being executed by the host 100 or what kind of screen being displayed by the host 100, as illustrated in FIG. 3C. If the processing unit 110 detects that the user has pressed the same specific combination of buttons CTRL+ALT+3 again, the processing unit 110 may update or reset the number of times of the counter 330 (e.g., numeral increasing, decreasing, or return to zero), and recalculate the number of times and issue the corresponding OSD control signal to the display apparatus 200.

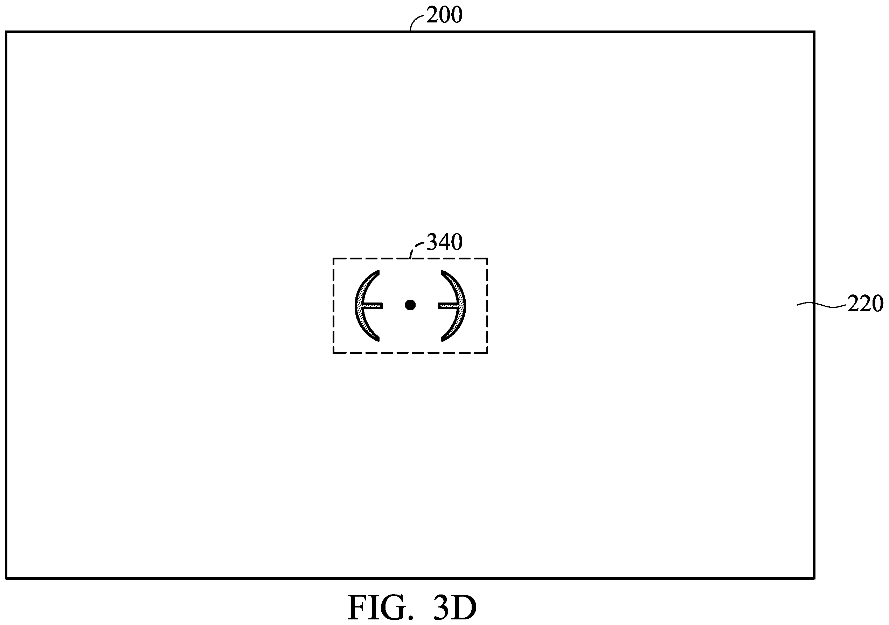

In response to the user utilizing the specific combination of buttons CTRL+ALT+4 to activate the crosshair of the OSD interfaces 232, the processing unit 110 may issue the corresponding OSD control signal corresponding to the crosshair to the display apparatus 200, and overwrites the specific region of the image signal stored in the image buffer 240 with the pattern of the corresponding crosshair. Accordingly, in response to the user utilizing the aforementioned specific combination of buttons to activate the crosshair 340 of the OSD interfaces, the user may view the crosshair 340 of the OSD interfaces on the display apparatus 200 regardless of the application being executed by the host 100 or what kind of screen being displayed by the host 100, as illustrated in FIG. 3D. If the processing unit 110 detects that the user has pressed the same specific combination of buttons CTRL+ALT+4 again, the processing unit 110 may select a crosshair by sequentially switching between a plurality of predetermined crosshairs (e.g., stored in the storage unit 230 in advance) or deactivate the crosshair 340, and issue the corresponding OSD control signal associated with the switched crosshair to the display apparatus 200.

In the aforementioned embodiment, the information dashboard 310, timer 320, counter 330, and crosshair 340 can be simultaneously rendered on the display apparatus 200, and the positions of the aforementioned OSD interfaces are not limited to those shown in FIGs. 3A∼3D, and the user may utilize an application to adjust the positions of the aforementioned OSD interfaces. The processing unit 110 may detect another specific combination of buttons (e.g., CTRL+ALT+A, not limited) to deactivate the OSD interfaces of all types. When the user wants to activate the OSD interface of a specific type, the user may use the corresponding specific combination of buttons as described in the aforementioned embodiments to activate the OSD interface of the specific type.

In an embodiment, the processing unit 110, for example, may execute the acoustic positioning API 143 as shown in FIG. 1. The acoustic positioning API 143 is capable of detecting the acoustic signal generated by another program (e.g., a PC game), and analyzing the acoustic signal for positioning, such as determining the orientation and/or distance of the acoustic signal. The acoustic positioning API 143 may also generate a corresponding OSD control signal, and transmit the corresponding OSD control signal to the display apparatus 200, wherein the details for overwriting the specific region of the image signal stored in the image buffer 240 using texts, numbers, or patterns of the OSD interface can be referred to in the aforementioned embodiment. Briefly, the OSD control signal is generated by the host in response to a specific event detected by the host 100, wherein the specific event may include the orientation and/or distance of the acoustic signal generated by an application executed by the host 100.

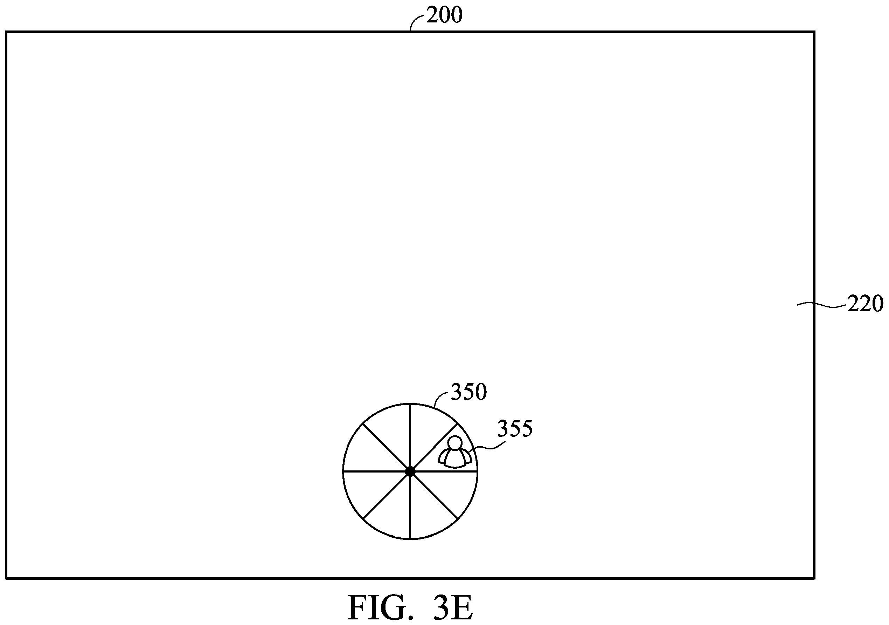

For example, the OSD control signal generated by the acoustic positioning API 143 may indicate a radar interface 350 and labels corresponding to the determined orientation and/or distance of the acoustic signal on the radar interface 350. For example, symbol 355 may indicate the determined orientation of the acoustic signal on the radar interface 350, as illustrated in FIG. 3E.

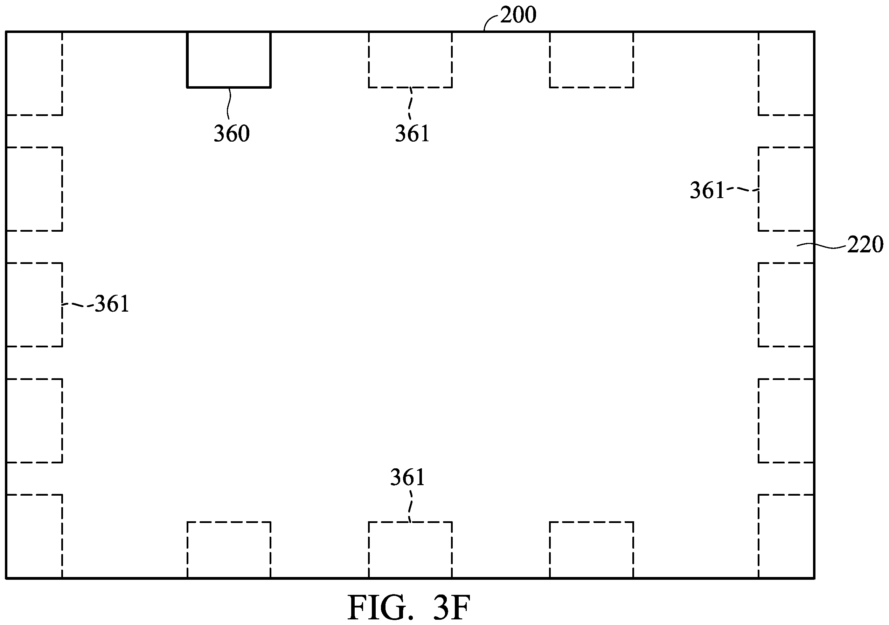

Alternatively or additionally, the OSD control signal generated by the acoustic positioning API 143 may overwrite an orientation symbol on the specific region of the determined orientation of the display region of the display apparatus 200, thereby indicating the determined orientation and/or distance of the acoustic signal, as illustrated in FIG. 3F. The orientation symbol 360 of the solid line may indicate the determined orientation of the acoustic signal, such as a position about 25 degrees northwest. The orientation symbol 361 of the dotted line may indicate the unused preset orientation symbols. In an embodiment, the orientation symbols 360 and 361 can be replaced by other specific symbols, colors, or texts.

In some embodiments, the application executed by the host 100 may communicate with the display controller 210 of the display apparatus 200 via the data-transmission channel, and the application may obtain information about various current settings of the display apparatus 200, such as the brightness, contrast, sharpness, color temperature of the display apparatus 200, and information about various current settings of the OSD interfaces, such as activation and the type of each of functions of the information dashboard, timer, counter, crosshair. In addition, the user interface of the application may include an editing interface for providing the function of editing customized symbols or crosshairs of the OSD interfaces. For example, the user may draw the pattern of the desired crosshair via the editing interface, assign the color of each pixel in the crosshair, and update the firmware 231 stored in the storage unit 230 of the display apparatus 200 by the application via the data-transmission channel, thereby adding user-customized crosshairs in addition to the pre-stored default crosshairs. The user may also use the same specific combination of buttons to switch between different crosshairs.

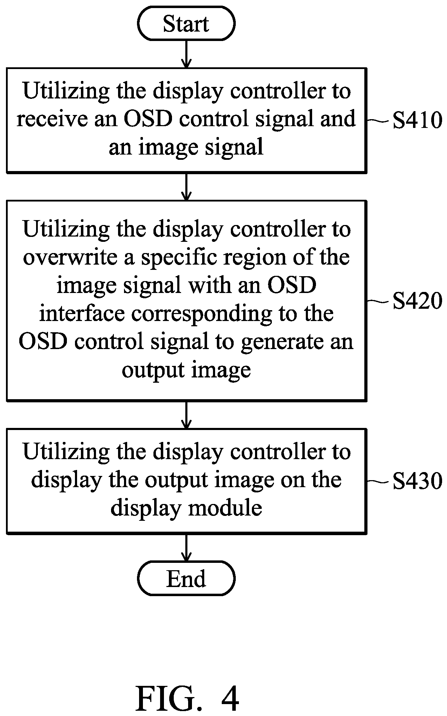

FIG. 4 is a flow chart of a display method of the on-screen-display interface in accordance with an embodiment of the invention. Referring to FIG. 1 and FIG. 4, the display method includes the following steps:
Step S410: receiving an OSD control signal and an image signal by the display controller 210. For example, the host 100 may transmit the OSD control signal and the image signal to the display apparatus 200 respectively via the data-transmission channel and the image-transmission channel, wherein the connections of the data-transmission channel and image-transmission channel can be referred to in the embodiments of FIGs. 2A and 2B.
Step S420: utilizing the display controller to overwrite a specific region of the image signal using an OSD interface corresponding to the OSD control signal to generate an output image. For example, the display controller 210 may store the image signal from the host 100 in the image buffer 240, and the display controller 210 may display the content stored in the image buffer 240 on the display module 220. The OSD control signal, for example, may be a command including text/numeric information and its type (e.g., information dashboard), and the display controller 210 may store the text/numeric information and its type of the OSD control signal in a volatile memory (e.g., an SRAM or register) of the display controller 210. The display controller 210 may retrieve patterns of the texts and numbers corresponding to the text/numerical information and its type from the storage unit 230, and overwrite the retrieved patterns into a specific region of the image signal stored in the image buffer 240 according to its type. In another embodiment, the OSD control signal may be a memory write command in a specific format,and the processing unit 110 may transmit the OSD control signal (i.e., a memory write command) to the display apparatus 200 via the transmission interface 150B, and bypass the display controller 210 to directly overwrite the information dashboard interface of the OSD interfaces, that includes specific text or numerical information (e.g., values of the aforementioned information about different components in the host 100), to a specific region of the image signal stored in the image buffer 240.
Step S430: utilizing the display controller to display the output image on the display module. For example, the timing controller 212 of the display controller 210 may display the image content stored in the image buffer 240 on the display module 220. The processing unit 110 of the host 110 or the display controller 210 of the display apparatus 200 may overwrite a specific region of the image signal stored in the image buffer 240 with the OSD interface indicated by the OSD control signal, wherein the OSD interface is at the same topmost layer among the image layers with the OSD menu of the display apparatus 200. That is, the OSD interface can be overlaid on other image layers without being affected by the image signals from different sources.

In view of the above, a computer system, a display apparatus, and a display method of the OSD interface are provided in the present invention. In the computer system, display apparatus, and display method of the OSD interface, the host is capable of retrieving information about the OSD interfaces of the display apparatus, and generate a corresponding OSD control signal in response to the host detecting a specific event, so that the host or the display controller of the display apparatus may overwrite the image signal received by the display apparatus with an OSD interface according to the OSD control signal, so that the OSD interface can be displayed on the topmost layer among image layers of the display apparatus, and may provide information required by the user, thereby improving user experience.

While the invention has been described by way of example and in terms of the preferred embodiments, it should be understood that the invention is not limited to the disclosed embodiments. On the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. A display apparatus, has a signal connection to a host, the display apparatus comprising:
a display module; and
a display controller, configured to receive an on-screen-display (OSD) control signal and an image signal from the host, wherein the OSD control signal is generated by the host in response to a specific event detected by the host,
wherein the host overwrites a specific region of the image signal with an OSD interface corresponding to the OSD control signal to generate an output image, and the display controller displays the output image on the display module.

2. The display apparatus as claimed in claim 1, wherein the specific event detected by the host comprises a specific input signal received by a peripheral apparatus of the host.

3. The display apparatus as claimed in claim 1, wherein the specific event detected by the host comprises an orientation and/or a distance of an acoustic signal generated by an application executed by the host.

4. The display apparatus as claimed in claim 3, wherein the OSD interface comprises a radar interface showing the orientation and/or the distance of the acoustic signal, or a specific symbol, a specific color, or a specific text corresponding to the orientation and/or the distance of the acoustic signal displayed on the display module.

5. The display apparatus as claimed in any of claims 1 to 4, wherein the display controller stores the image signal in an image buffer, and the host overwrites the specific region of the image signal stored in the image buffer with the OSD interface according to the OSD control signal to generate the output image.

6. The display apparatus as claimed in any of claims 1 to 5, further comprising:
a storage unit, configured to store one or more predetermined OSD interfaces,
wherein the display controller retrieves one of the one or more predetermined OSD interfaces corresponding to the OSD control signal from the storage unit as the OSD interface.

7. A computer system, comprising:
a host, configured to execute an application to generate an image signal, and detect a specific event on the host to generate an on-screen-display (OSD) control signal; and
a display apparatus, electrically connected to the host, the display apparatus comprising:
a display module; and
a display controller, configured to receive the OSD control signal and the image signal from the host,
wherein the host overwrites a specific region of the image signal with an OSD interface corresponding to the OSD control signal to generate an output image, and the display controller displays the output image on the display module.

8. The computer system as claimed in claim 7, wherein the specific event detected by the host comprises a specific input signal received by a peripheral apparatus of the host.

9. The computer system as claimed in claim 7, wherein the specific event detected by the host comprises an orientation and/or a distance of an acoustic signal generated by an application executed by the host.

10. The computer system as claimed in any of claims 7 to 9, wherein the display controller stores the image signal in an image buffer, and the host overwrites the specific region of the image signal stored in the image buffer with the OSD interface according to the OSD control signal to generate the output image.

11. The computer system as claimed in any of claims 7 to 10, wherein the display apparatus further comprises a storage unit configured to store one or more predetermined OSD interfaces,
wherein the display controller retrieves one of the one or more predetermined OSD interfaces corresponding to the OSD control signal from the storage unit as the OSD interface.

12. A display method of an on-screen-display (OSD) interface, for use in a display apparatus, wherein the display apparatus comprises a display module and a display controller, the method comprising:
utilizing the display controller to receive an OSD control signal and an image signal;
utilizing the display controller to overwrite a specific region of the image signal with an OSD interface corresponding to the OSD control signal to generate an output image; and
utilizing the display controller to display the output image on the display module.

13. The display method an as claimed in claim 12, wherein the display apparatus has a signal connection to a host, and the OSD control signal is generated by the host in response to a specific event detected by the host.

14. The display method an as claimed in claim 13, wherein the step of utilizing the display controller to overwrite a specific region of the image signal with an OSD interface corresponding to the OSD control signal to generate an output image comprises:
utilizing the display controller to store the image signal in an image buffer; and
utilizing the host to overwrite the OSD interface on the specific region of the image signal stored in the image buffer according to the OSD control signal to generate the output image.

15. The display method an as claimed in any of claims 12 to 14, wherein the display apparatus further comprises a storage unit configured to store one or more predetermined OSD interfaces, and the display method further comprises:
utilizing the display controller to retrieve one of the one or more predetermined OSD interfaces corresponding to the OSD control signal from the storage unit as the OSD interface.
